# EUROPÄISCHE PATENTSCHRIFT

(11) **EP 3 739 276 B1**
(45) Veröffentlichungstag und Bekanntmachung des Hinweises auf die Patenterteilung: **03.01.2024**
(21) Anmeldenummer: 20172633.8
(22) Anmeldetag: 02.05.2020
(51) Int. Cl.: F24H 1/00, F24H 1/10, F24H 1/12, F24H 1/14, H05B 3/20, H05B 3/40, H05B 3/42, B60H 1/00, B60H 1/22, B60H 1/32, F25B 5/00, F25B 9/00, F25B 25/00, F25B 49/00, F28D 7/10, F28D 21/00, H01M 10/663, H01M 10/625, F25B 49/02

(54) **WÄRMETAUSCHER UND KREISLAUFSYSTEM ZUM TEMPERIEREN**
HEAT EXCHANGER AND TEMPERATURE CONTROL CIRCUIT SYSTEM
ÉCHANGEUR DE CHALEUR ET SYSTÈME DE CIRCUIT PERMETTANT LA THERMORÉGULATION

(30) Priorität: 13.05.2019 DE 202019102689 U
(43) Veröffentlichungstag der Anmeldung: 18.11.2020
(73) Patentinhaber: Konvekta Aktiengesellschaft, 34613 Schwalmstadt-Ziegenhain (DE)
(72) Erfinder: Knierim, Alexander, 34626 Neukirchen (DE); Sonnekalb, Michael, 34613 Schwalmstadt (DE)
(74) Vertreter: Lindinger, Bernhard

(56) Entgegenhaltungen:
- WO-A1-02/04879
- WO-A1-2016/001418
- DE-A1- 4 201 944
- DE-A1-102012 017 404
- FR-A1- 3 026 165
- US-B1- 7 661 460

## Beschreibung

### Gebiet der Technik:

Die Erfindung betrifft Wärmetauscher mit wenigstens einer in einen Fluidkreislauf integrierbaren Leitung für ein erstes Fluid und mit wenigstens einer dazu in Wärmetauschverbindung für einen Wärmetausch eines ersten mit einem zweiten Fluid angeordneten in einen weiteren Fluidkreislauf integrierbaren Leitung für ein zweites Fluid. Derartige auch als Fluid-Fluid-Wärmetauscher bezeichnete Wärmetauscher werden insbesondere bei Klimaanlage für Fahrzeuge mit einem Kreislaufsystem mit Kältemittelkreislauf und Kühlkreislauf zum Wärmetausch zwischen den Fluiden der beiden Kreisläufe verwendet. Ferner betrifft die Erfindung ein Kreislaufsystem und ein Fahrzeug damit. Das Kreislaufsystem umfasst einen ersten Fluidkreislauf mit wenigstens einem Verdichter, einem Kondensator/Gaskühler und einem Expansionsorgan für ein darin als Kältemittel zirkulierendes erstes Fluid sowie einen zweiten Fluidkreislauf mit wenigstens einer Fluidfördereinrichtung für ein darin als Kühlmittel zirkulierendes zweites Fluid, wobei der Wärmetausch zwischen beiden Fluiden über einen in beide Fluidkreisläufe integrierten Wärmetauscher erfolgt.

### Stand der Technik:

Bekannt sind Wärmetauscher, die als Fluid-Fluid-Wärmetauscher dem Wärmetausch zwischen zwei Fluidkreisläufen dienen. So ist in WO2015/032599 ein derartiger als Verdampfer bezeichneter Wärmetauscher zum Wärmetausch zwischen einem Kältemittelkreislauf, also einem Kältemittel als erstes Fluid führenden Fluidkreislauf, und einem Kühlmittelkreislauf, also einem Kühlmittel als zweites Fluid führenden weitern Fluidkreislauf, offenbart. Der Fluid-Fluid-Wärmetauscher ist dort einerseits hinter dem Expansionsorgan und vor dem Verdichter, also im Niedrigdruckbereich, des Kältemittel führenden Fluidkreislaufs integriert und andererseits im Kühlmittel führenden Fluidkreislauf vor einem zum Kühlen eines Fahrzeug-Aggregats vorgesehenen Aggregat-Wärmetauscher integriert. Ferner enthält dort zusätzlich der Kühlmittelkreislauf einen Umgebungs-Wärmetauscher, über den der Kühlmittelstrom Wärme aufnehmen und abgeben kann. Mit einem derartigen zusätzlichen Umgebungs-Wärmetauscher ist die Temperierung nur eingeschränkt möglich. Ist es beispielsweise erforderlich, dass das zu temperierende Fahrzeug-Aggregat bei niedrigen Umgebungstemperaturen vorgeheizt werden muss, ist ein Umgebungs-Wärmetauscher zur entsprechenden Erwärmung des Kühlmittels ungeeignet.

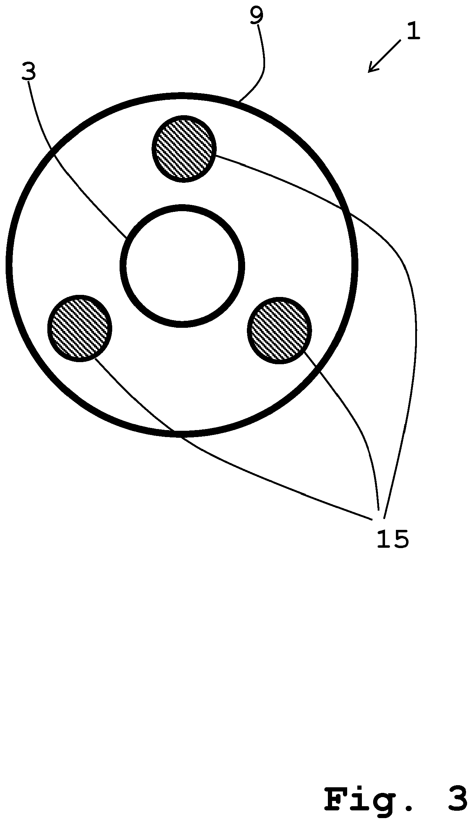

In DE19829334C1 ist ein Kreislaufsystem mit einem als Wärmepumpe ausgebildeten Kältemittelkreislauf und einem thermischen Speicher mit einem Speicherfluid offenbart. Nach der in der dortigen Figur 3 gezeigten Ausführung erstreckt sich die das Kältemittel vom Verdichter des Kältemittelkreislaufs führende Anschlussleitung koaxial durch ein das Speicherfluid führendes Steigrohr im Speicher.

In DE102017118424A1 ist ein Kreislaufsystem mit einem Fluid-Fluid-Wärmetauscher wie beispielsweise einem Plattenwärmetauscher, zum Wärmetausch zwischen einem ein Kältemittel als erstes Fluid führenden ersten Fluidkreislauf und einem ein Kühlmittel als zweites Fluid führenden zweiten Fluidkreislauf, offenbart. Der Fluid-Fluid-Wärmetauscher ist dort einerseits im Niedrigdruckbereich des ein Kältemittel führenden ersten Fluidkreislaufs integriert und andererseits im Kühlmittel führenden zweiten Fluidkreislauf vor einer zum Temperieren einer Traktionsbatterie vorgesehenen Wärmetauschverbindung integriert. Außerdem ist dort im zweiten Fluidkreislauf zusätzliche eine schaltbare aus PTC-Elementen aufgebaute elektrisch betreibbare Heizeinrichtung nach dem Fluid-Fluid-Wärmetauscher zum bei Bedarf Erwärmen des zweiten Fluides integriert. Damit lässt sich zwar beispielsweise vor einem Kaltstart das zweite Fluid und damit die Traktionsbatterie vorheizen, aber eine derartige zusätzlich im das zweite Fluid führenden Fluidkreislauf integrierte elektrisch betreibbare Heizeinrichtung verbraucht unnötig viel Platz, Material und Gewicht und verursacht dadurch entsprechend hohe Kosten. Entsprechend nachteilige Kreislaufsysteme sind beispielsweise auch in EP2212136B1, in DE102011076737A1 und in DE102013109666A1 offenbart. In WO2016/001418A1 ist ein Plattenwärmetauscher für den Wärmetausch zwischen zwei Fluiden zweier Fluidkreisläufe offenbart, bei dem zwischen zumindest zwei von dem einen Fluid durchströmbaren Platten ein elektrisch betreibbares plattenförmiges Heizelement angeordnet ist. In US7661460B1 ist ein zylinderförmiger Wärmetauscher zum Wärmetausch zwischen einem Kältemittel und einem Wärmetransportfluid offenbart, bei dem in der Mitte längs der Längsachse ein Rohr angeordnet ist, in das ein elektrischer Heizstab einführbar ist. Um das mittige Rohr ist dabei die Kältemittelleitung gewunden und den äußeren Mantel bildet eine weitere Rohrwand, so dass zwischen mittigem Rohr, Kältemittelleitung und äußerem Mantel das Wärmetransportfluid strömen kann. WO02/04879A1 offenbart einen Plattenwärmetauscher für den Wärmetausch zwischen zwei Fluiden zweier Fluidkreisläufe, bei dem zwischen von Fluid durchströmbaren Bereichen zumindest ein elektrisch betreibbare Heizschicht angeordnet ist. In DE4201944A1 ist eine Flüssigkeitsheizeinrichtung mit zwei koaxial zueinander verlaufenden Röhren zum Durchfluss von je einer Flüssigkeit offenbart, wobei eine elektrisch betreibbare Heizeinrichtung um die innere der beiden Röhren angeordnet ist, so dass zwei durch die Flüssigkeitsheizeinrichtung strömende Flüssigkeiten gleichzeitig heizbar sind. DE102012017404A1 zeigt einen rohrförmigen Wärmetauscher mit zumindest einem Innenrohr und einem Außenrohr zum gleichzeitigen Durchströmen und Wärmetausch von zwei Fluiden. In FR3026165A1 ist ein rohrförmiger Wärmetauscher mit zwei koaxial zueinander verlaufenden Röhren zum Durchfluss von einer Flüssigkeit offenbart, wobei in der inneren Röhre auf der Mittelachse ein elektrisch betreibbarer Heizdraht und jeweils parallel dazu außen an der äußeren Röhre neun weitere elektrisch betreibbare Heizdrähte verlaufen.

Der im Patentanspruch 1 angegebenen Erfindung liegt das Problem zugrunde, einen Wärmetauscher mit wenigstens einer in einen Fluidkreislauf integrierbaren Leitung für ein erstes Fluid und mit wenigstens einer dazu in Wärmetauschverbindung für einen Wärmetausch eines ersten mit einem zweiten Fluid angeordneten in einen weiteren Fluidkreislauf integrierbaren Leitung für ein zweites Fluid, der insbesondere hinsichtlich einer Temperierung bezüglich des zweiten Fluides verbessert ist, bereitzustellen.

Entsprechende Probleme für ein Kreislaufsystem und für ein Fahrzeug liegen den in den Patentansprüchen 4 und 8 angegebenen Erfindungen zugrunde.

### Zusammenfassung der Erfindung:

Das der im Patentanspruch 1 angegebenen Erfindung zugrundeliegende Problem wird mit den im Patentanspruch 1 aufgeführten Merkmalen gelöst. Dadurch dass der Wärmetauscher mit wenigstens einer in einen Fluidkreislauf integrierbaren Leitung für ein erstes Fluid und mit wenigstens einer dazu in Wärmetauschverbindung für einen Wärmetausch eines ersten mit einem zweiten Fluid angeordneten in einen weiteren Fluidkreislauf integrierbaren Leitung für ein zweites Fluid zumindest ein elektrisch betreibbares Heizelement, das in Wärmeleitverbindung mit zumindest einer der wenigstens einen Leitung für ein zweites Fluid angeordnet ist, umfasst, und der Wärmetauscher für eine Integration in ein Kreislaufsystem derart ausgebildet und vorgesehen ist, dass die Leitung für das erstes Fluid in den Niedrigdruckbereich eines ersten Fluidkreislaufs mit wenigstens einem Verdichter, einem Kondensator/Gaskühler und einem Expansionsorgan für das darin als Kältemittel zirkulierende erste Fluid und die Leitung für das zweites Fluid in einen zweiten Fluidkreislauf mit wenigstens einer Fluidfördereinrichtung für das darin als Kühlmittel zirkulierende zweite Fluid zu integrieren sind, und wenigstens eine Leitung für ein erstes Fluid koaxial in wenigstens einer Leitung für ein zweites Fluid angeordnet ist und in Wärmeleitverbindung außen an wenigstens einer Leitung für ein zweites Fluid, in der koaxial eine Leitung für ein erstes Fluid verläuft, das wenigstens eine elektrisch betreibbare Heizelement angeordnet ist, wobei das wenigstens eine elektrisch betreibbare Heizelement
einen um die wenigstens eine Leitung für ein zweites Fluid gewundenen Heizdraht oder eine um die wenigstens eine Leitung für ein zweites Fluid herum mit seiner einen Oberfläche anliegende Heizfolie umfasst, wird das Problem gelöst.

In Wärmeleitverbindung mit einer Leitung ist unter anderem auch bei einer Ausführungsform so zu verstehen, bei der die Wärmeleitverbindung derart ausgebildet ist, dass sie bei durch die Leitung strömenden zweiten Fluid direkt zwischen einem Heizelement und dem zweiten Fluid innerhalb der Leitung besteht.

Die Erfindung hat den Vorteil, dass das wenigstens eine elektrisch betreibbare Heizelement, das durch die Wärmeleitverbindung mit wenigstens einer Leitung für ein zweites Fluid zum Erwärmen des zweiten Fluides geeignet ist, im Wärmetauscher integriert ist. Der erfindungsgemäße Wärmetauscher ermöglicht also einerseits eine Kühlung eines zweiten Fluides durch ein erstes Fluid und anderseits die Erwärmung des zweiten Fluides durch das wenigstens eine elektrisch betreibbare Heizelement. Eine zusätzliche elektrisch betreibbare Heizeinrichtung in einem Fluidkreislauf für das zweite Fluid ist somit für eine bedarfsweise Erwärmung des zweiten Fluides entbehrlich. Durch den erfindungsgemäßen Wärmetauscher werden also insbesondere hinsichtlich einer Temperierung bezüglich des zweiten Fluides vorteilhaft Platz, Material und Gewicht sowie Kosten gespart. Die koaxiale Anordnung der Leitungen ist besonders platz- und materialsparend und zugleich existiert eine effektive Wärmetauschverbindung zwischen den Leitungen und bei Betrieb somit auch zwischen beiden Fluiden.

Die äußere Oberfläche der Leitung für ein zweites Fluid ist üblicherweise deren größte. Das wenigstens eine elektrisch betreibbare Heizelement lässt sich von außen gut aufbringen und ein unerwünschtes Heizen auch eines ersten Fluides in der inneren Leitung erfolgt so nicht oder ist zumindest möglichst gering.

Die erfindungsgemäßen Arten der Ausführungen eines elektrisch betreibbaren Heizelements sind effektiv, kostengünstig und einfach zu bewerkstelligen. Besonders effektiv, kostengünstig und einfach zu bewerkstelligen sowie zu handhaben ist die Ausgestaltung, bei der das wenigstens eine als Heizfolie ausgebildete elektrisch betreibbare Heizelement um die wenigstens eine Leitung für ein zweites Fluid, in der koaxial eine Leitung für ein erstes Fluid verläuft, herum mit seiner einen Oberfläche anliegend angeordnet ist.

Es sind die wenigstens eine in einen Fluidkreislauf integrierbare Leitung für ein erstes Fluid als Kältemittelleitung und die wenigstens eine in einen weiteren Fluidkreislauf integrierbare Leitung für ein zweites Fluid als Kühlmittelleitung ausgebildet. Damit ist der Wärmetauscher in einen Kältemittel-Kreislauf mit einem Kältemittel wie zum Beispiel R-134a, R-1234yf oder R-744 als erstes Fluid und in einen Kühlmittelkreislauf mit Kühlmittel wie beispielsweise ein Wasser-Glykol-Gemisch als zweites Fluid zum Wärmetausch zwischen den beiden Fluidkreisläufen integrierbar.

In den Unteransprüchen sind vorteilhafte Ausgestaltungen, Weiterbildungen und Verbesserungen des jeweiligen Gegenstandes der Erfindung angegeben.

Besonders vorteilhaft ist bei einer Anordnung jeweils ein kreisrunder Querschnitt der beiden Leitungen in Schnittebene senkrecht zu ihrer Längsachse, denn mit einem derartigen Querschnitt sind die Leitungen wenig schadanfällig, besonders druckbeständig und durch ihre Zylindersymmetrie gleichmäßig hinsichtlich des Wärmetauschs. Nach einer ebenfalls vorteilhaften Alternative weist die wenigstens eine Leitung für ein zweites Fluid, in der koaxial wenigstens eine Leitung für ein erstes Fluid verläuft, einen rechteckigen vorzugsweise quadratischen Querschnitt in Schnittebene senkrecht zu ihrer Längsachse auf. Dadurch ist das Verhältnis von Oberfläche zu Volumen für ein effektives Heizen eines zweiten Fluides mit auf der äußeren Oberfläche angebrachten Heizelement/en vorteilhaft. So können auch elektrisch betreibbare Heizelemente mit starrer planer Fläche außen auf der Leitung für ein zweites Fluid angebracht werden.

Alternativ ist ebenfalls bei der koaxialen Anordnung der Leitungen eine Ausgestaltung des Wärmetauschers von Vorteil, bei der außerhalb der Leitung für ein erstes Fluid und in Wärmeleitverbindung innerhalb der wenigstens einen koaxial verlaufenden Leitung für ein zweites Fluid zumindest ein des wenigstens einen elektrisch betreibbaren Heizelements angeordnet ist. Dadurch besteht bei durch die Leitung strömenden zweiten Fluid eine Wärmeleitverbindung direkt zwischen dem/den Heizelement/en und dem zweiten Fluid, was ein besonders effektives Heizen des zweiten Fluides ermöglicht.

Gemäß einer vorteilhaften Weiterbildung des erfindungsgemäßen Wärmetauschers sind mehrere der koaxial jeweils eine Leitung für das erste Fluid enthaltende Leitungen für das zweite Fluid bezüglich ihrer Längsachsen parallel nebeneinander angeordnet. Durch die Aufteilung in mehrere parallele Leitungen ist der Wärmetausch zwischen einem ersten und zweiten Fluid sowie die Heizmöglichkeit eines zweiten Fluides durch die elektrisch betreibbaren Heizelemente besonders effektiv. Damit ist die Oberfläche im Verhältnis zum Volumen im Vergleich zu nur einen gleichlangen Koaxialleitung vergrößert. Der Wärmetauscher kann dadurch bei gleicher Effektivität vorteilhaft kurz sein.

Vorzugsweise ist die Leitung für ein erstes Fluid von mindestens zwei mit dazu paralleler Längsachse verlaufenden Leitungen für ein zweites Fluid oder von mindestens zwei mit dazu paralleler Längsachse verlaufenden Segmenten einer Leitung für ein zweites Fluid zumindest teilweise umgeben, und zwischen wenigstens zwei dieser Leitungen für ein zweites Fluid oder zwischen wenigstens zwei der Segmente einer Leitung für ein zweites Fluid ist in Wärmeleitverbindung zumindest ein des wenigstens einen elektrisch betreibbaren Heizelements angeordnet. Eine derartige Ausgestaltung des Wärmetauschers ist besonders kompakt.

Nach einer vorteilhaften Ausführung des Wärmetauschers ist er als Plattenwärmetauscher ausgebildet, wobei eine Schicht des Wärmetauschers zumindest eine der wenigstens einen Leitung für ein zweites Fluid umfasst und diese Schicht schichtförmig angrenzend zwischen einer zumindest ein elektrisch betreibbares Heizelement umfassenden Schicht und einer zumindest eine der wenigstens einen Leitung für das erste Fluid umfassenden Schicht wärmeleitend angeordnet ist. Ein derartiger Plattenwärmetauscher ist kompakt und effektiv. Möglich ist auch eine Ausführung umfassend mehrere sich überlappender solcher Schichtfolgen mit jeweils zur im Schichtstapel benachbarten umgekehrter Schichtreihenfolge, also jeweils mit einer Schicht mit Leitung für ein zweites Fluid zwischen einer Schicht mit elektrisch betreibbarem Heizelement und einer Schicht mit Leitung für ein erstes Fluid. Vorzugsweise umfasst die wenigstens ein elektrisch betreibbares Heizelement umfassende Schicht eine Heizfolie als das elektrisch betreibbare Heizelement. Eine Heizfolie lässt sich gut als oder in eine/r Schicht in einen Plattenwärmetauscher anordnen und ist insbesondere wegen ihrer großen beim Heizen wirksamen Fläche besonders effektiv.

Das der im Patentanspruch 4 angegebenen Erfindung zugrundeliegende Problem wird mit den im Patentanspruch 4 aufgeführten Merkmalen gelöst. Dadurch dass das Kreislaufsystem mit einem ersten Fluidkreislauf mit wenigstens einem Verdichter, einem Kondensator/Gaskühler und einem Expansionsorgan für ein darin als Kältemittel zirkulierendes erstes Fluid sowie mit einem zweiten Fluidkreislauf mit wenigstens einer Fluidfördereinrichtung für ein darin als Kühlmittel zirkulierendes zweites Fluid, einen erfindungsgemäßen Wärmetauscher aufweist, wobei dieser in den Niedrigdruckbereich des ersten Fluidkreislaufs und in den zweiten Fluidkreislauf integriert ist, und das wenigstens eine Heizelement dieses Wärmetauschers mit elektrischer Energie aus einer elektrischen Energiequelle/-speicher betreibbar ist, wird das Problem gelöst. Als Vorteile eines derartigen Kreislaufsystems gelten entsprechend die oben aufgeführten Vorteile für einen erfindungsgemäßen Wärmetauscher. Insbesondere ist eine zusätzliche elektrische Heizeinrichtung in dem Fluidkreislauf für das zweite Fluid für eine bedarfsweise Erwärmung des zweiten Fluides entbehrlich. Es werden durch die erfindungsgemäße Integration eines erfindungsgemäßen Wärmetauschers in das Kreislaufsystem also vor allem hinsichtlich einer Temperierung bezüglich des zweiten Fluides vorteilhaft Platz, Material, Gewicht sowie Kosten gespart.

In den Unteransprüchen sind vorteilhafte Ausgestaltungen, Weiterbildungen und Verbesserungen des jeweiligen Gegenstandes der Erfindung angegeben.

Vorzugsweise ist im zweiten Fluidkreislauf für das zweite Fluid eine mittels Ventil schaltbarer Bypass zur wenigstens einen in den zweiten Fluidkreislauf integrierten Leitung des erfindungsgemäßen Wärmetauschers angeordnet und/oder ist im ersten Fluidkreislauf für das erste Fluid eine mittels Ventil schaltbarer Bypass zur wenigstens einen in den ersten Fluidkreislauf integrierten Leitung dieses Wärmetauschers angeordnet. Ein derartiger Bypass ermöglicht die Abkopplung des jeweiligen aktiven Teils des Fluidkreislaufs für das erste und/oder zweite Fluid vom erfindungsgemäßen Wärmetauscher. Damit ist eine Temperierung des zweiten Fluides flexibler zu realisieren. Vorteilhaft umfasst das Kreislaufsystem zum Einstellen der Temperatur des zweiten Fluides eine Regelung ausgebildet zum Regeln des/der Ventil(s)/e für den wenigstens einen schaltbaren Bypass und zum Regeln des wenigstens einen elektrischen Heizelements des Wärmetauschers. Diese Regelung ermöglicht eine automatische Einstellung der Temperatur des zweiten Fluides, was insbesondere bei einer Ausführung des Kreislaufsystems mit einer Wärmetauschverbindung im zweiten Fluidkreislauf mit zumindest einem zu temperierenden Objekt eine Verbesserung darstellt. Das zumindest eine zu temperierende Objekt ist bevorzugt ein Aggregat eines Fahrzeugs, wie insbesondere eine Traktionsbatterie. Eine Traktionsbatterie sollte insbesondere hinsichtlich ihrer Effizienz und Haltbarkeit in einem bestimmten Temperaturbereich betrieben werden. Das erfindungsgemäße Kreislaufsystem ist für deren Temperierung besonders gut geeignet.

Das dem erfindungsgemäßen Wärmetauscher zugrundeliegenden Problem entsprechende Problem für ein Fahrzeug wird durch ein Fahrzeug mit einem erfindungsgemäßen Kreislaufsystem gelöst. Besonders gut geeignet ist dafür ein Elektro- oder Hybridfahrzeug, wie insbesondere ein derartiger Radlader, mit einem erfindungsgemäßen Kreislaufsystem zum beispielsweise Temperieren einer Traktionsbatterie.

Schließlich können die Merkmale der Unteransprüche zu Patentanspruch 1 im Wesentlichen frei miteinander und nicht durch die in den Ansprüchen vorliegende Reihenfolge festgelegt kombiniert werden, sofern sie unabhängig voneinander sind. Gleiches gilt für die Unteransprüche zu Patentanspruch 4.

### Kurze Beschreibung der Zeichnungen:

Anhand der Zeichnungen werden Ausführungsbeispiele der Erfindung erläutert.

Es zeigen
Fig. 1a ein Ausführungsbeispiel eins erfindungsgemäßen Wärmetauschers,
Fig. 1b eine Ansicht eines Querschnitts in Schnittebene senkrecht zur Längsachse des in Fig. 1a dargestellten Ausführungsbeispiels eines Wärmetauschers,
Fig. 2 eine Ansicht eines Querschnitts in Schnittebene senkrecht zur Längsachse eines weiteren Ausführungsbeispiels eines erfindungsgemäßen Wärmetauschers,
Fig. 3 eine Ansicht eines Querschnitts in Schnittebene senkrecht zur Längsachse eines Ausführungsbeispiels eines Wärmetauschers der nicht erfindungsgemäß ist ,
Fig. 4 eine Ansicht eines Querschnitts in Schnittebene senkrecht zur Längsachse eines Wärmetauschers der nicht erfindungsgemäß ist ,
Fig. 5 ein weiteres Ausführungsbeispiel eines erfindungsgemäßen Wärmetauschers,
Fig. 6 eine Ansicht eines vertikalen Schnitts von einem als Plattenwärmetauscher ausgebildeten Ausführungsbeispiel eines Wärmetauschers,
Fig. 7 ein Ausführungsbeispiel eines erfindungsgemäßen Kreislaufsystems,
Fig. 8 ein weiteres Ausführungsbeispiel eines erfindungsgemäßen Kreislaufsystems, und
Fig. 9 ein Ausführungsbeispiel eines erfindungsgemäßen Fahrzeugs.

### Ausführliche Beschreibung der Erfindung:

Alle Zeichnungen sind schematisch zu verstehen. Auf maßstabsgetreue Abbildungen wurde zum Zwecke erhöhter Klarheit der Darstellung verzichtet.

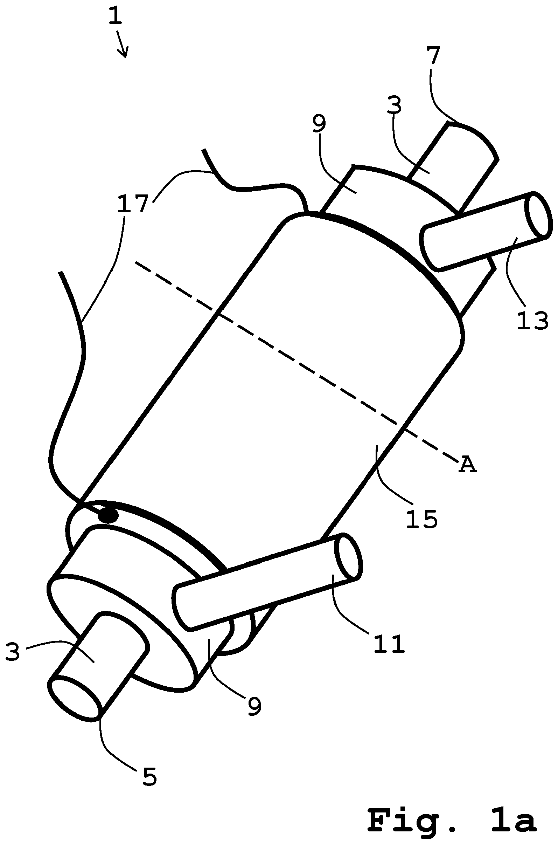

In Fig. 1a ist ein Ausführungsbeispiel eins Wärmetauschers 1, der als Fluid-Fluid-Wärmetauscher ausgebildet ist, gezeigt. In Längsachsenausrichtung verläuft in seinem Innern eine Leitung 3 für ein erstes Fluid. Diese Leitung 3 ist in einen Fluidkreislauf mit ihren vorderen Anschlussende 5 und ihrem hinteren Anschlussende 7 integrierbar. Die Leitung 3 ist als Kältemittelleitung ausgebildet. Sie ist dazu geeignet, dass Kältemittel wie beispielsweise R-134a, R-1234yf oder R-744 durch sie hindurchströmen kann. Sie ist rohrförmig mit kreisrundem Querschnitt ausgeformt. Ihre Rohrwand ist aus Stahl oder einem anderen geeigneten dafür üblichen Material. Die Leitung 3 verläuft koaxial mit der Leitung 9 für ein zweites Fluid in dieser Leitung 9. Die Leitung 9 ist ebenfalls rohrförmig mit kreisrundem Querschnitt, wobei dieser entsprechend größer als der der Leitung 3 für das erste Fluid ist. Der aus der Leitung 9 für ein zweites Fluid im vorderen Bereich seitlich herausragender Anschlussstutzen 11 und im hinteren Bereich seitlich herausragender Anschlussstutzen 13 dienen zum Anschluss an einen Fluidkreislauf für ein zweites Fluid, sodass also die Leitung 9 in einen Fluidkreislauf für ein zweites Fluid integrierbar ist. Sie ist als Kühlmittelleitung für ein Kühlmittel, wie beispielsweise ein Wasser-Glykol-Gemisch oder deionisiertes Wasser, als zweites Fluid ausgebildet. Ihre Rohrwand ist aus dafür üblichem geeignetem Material wie zum Beispiel Stahl. Die in der Leitung 9 für das zweite Fluid verlaufende Leitung 3 für das erste Fluid ist in Wärmetauschverbindung für einen Wärmetausch eines ersten mit einem zweiten Fluid angeordnet. Durch die Rohrwand der Leitung 3 kann Wärme vom in der Leitung 9 strömenden zweiten Fluid mit einem durch die koaxial in ihr verlaufende Leitung 3 strömenden ersten Fluid ausgetauscht werden. Außen um die Leitung 9 für das zweite Fluid herum mit seiner einen Oberfläche anliegend ist ein als Heizfolie ausgebildetes elektrisches Heizelement 15 angeordnet. Dieses um die Leitung 9 für ein zweites Fluid quasi als Mantel herumliegende elektrische Heizelement 15 ist also in Wärmeleitverbindung mit dieser Leitung 9 angeordnet. Damit kann ein in der Leitung 9 strömendes zweites Fluid erwärmt werden. Die elektrischen Leitungen 17 dienen zum Anschluss einer elektrischen Energiequelle oder eines elektrischen Energiespeicher zur Stromversorgung des elektrisch betreibbaren Heizelements 15. Als elektrisch betreibbares Heizelement 15 außen an der Leitung 9 für das zweite Fluid sind auch andere Ausgestaltungen, wie beispielsweise ein Heizstab mit wärmeleitend verbundenem Wärmeleitblech oder ein um die wenigstens eine Leitung 9 für das zweite Fluid gewundener Heizdraht, denkbar.

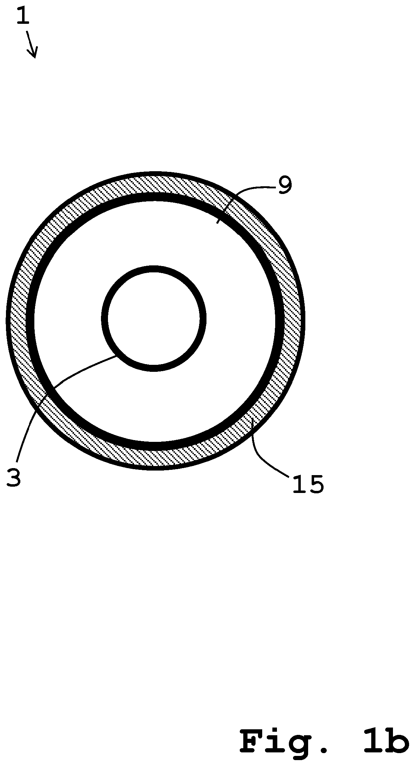

In Fig. 1b ist eine Ansicht eines Querschnitts in Schnittebene durch die gestrichelt in Fig. 1a verlaufende Linie A senkrecht zur Längsachse des in Fig. 1a gezeigten Wärmetauscher 1 dargestellt. Im Zentrum befindet sich die Leitung 3 für ein erstes Fluid, mit ihrem kreisrunden Querschnitt. Die Leitung 3 liegt koaxial in der Leitung 9 für ein zweites Fluid, die ebenfalls einen kreisrunden Querschnitt aufweist. Die Querschnitte der beiden Leitungen 3 und 9 sind konzentrisch. Ein zweites Fluid würde also durch die Ringfläche zwischen den Querschnittflächen der Rohrwände der beiden Leitungen 3 und 9 strömen. Den äußeren Ring um die Leitung 9 für das zweite Fluid herum bildet in Wärmeleitverbindung dazu das als Heizfolie ausgebildete elektrisch betreibbare Heizelement 15.

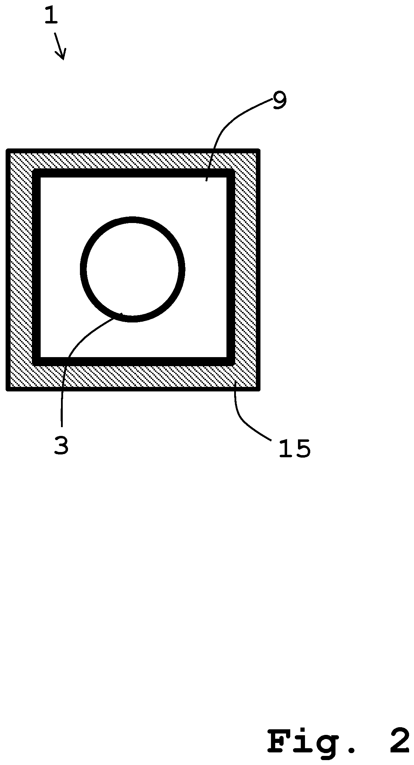

In Fig. 2 ist eine Ansicht eines Querschnitts in Schnittebene senkrecht zur Längsachse eines weiteren Ausführungsbeispiels eines Wärmetauschers 1 dargestellt. Der Wärmetauscher 1 ist bis auf den quadratischen Querschnitt der Leitung 9 für ein zweites Fluid und damit auch quadratischem Querschnitt des als Heizfolie außen an der Leitung 9 anliegenden elektrischen Heizelements 15 genauso aufgebaut wie der in Fig. 1a dargestellte Wärmetauscher 1. So liegt die Leitung 3 für ein erstes Fluid in der Leitung 9 für ein zweites Fluid koaxial zueinander. Es besteht eine Wärmetauschverbindung für einen Wärmetausch eines ersten mit einem zweiten Fluid durch die Rohrwand der Leitung 3 für ein erstes Fluid. Sie ist in einen Fluidkreislauf für ein erstes Fluid integrierbar. Die Leitung 9 ist in einen weiteren Fluidkreislauf für ein zweites Fluid integrierbar. Statt einer Heizfolie sind beispielsweise auch als elektrisch betreibbare Heizelemente 15 vier Heizstäbe mit dem jeweiligen Heizstab wärmeleitend verbundenen Wärmeleitblechen, die jeweils auf einer der vier in Leitungslängsrichtung verlaufenden Außenflächen der Leitung 9 für ein zweites Fluid aufliegen, denkbar.

In Fig. 3 ist eine Ansicht eines Querschnitts in Schnittebene senkrecht zur Längsachse eines Ausführungsbeispiels eines Wärmetauschers 1 gezeigt. Die Leitung 3 für ein erstes Fluid liegt koaxial zueinander in der Leitung 9 für ein zweites Fluid. Es besteht eine Wärmetauschverbindung für einen Wärmetausch eines ersten mit einem zweiten Fluid durch die Rohrwand der Leitung 3 für ein erstes Fluid. Sie ist in einen Fluidkreislauf für ein erstes Fluid integrierbar. Die Leitung 9 ist in einen weiteren Fluidkreislauf für ein zweites Fluid integrierbar. Außerhalb der Leitung 3 für ein erstes Fluid und in Wärmeleitverbindung innerhalb der Leitung 9 für ein zweites Fluid sind ohne auf die Anzahl beschränkt zu sein drei elektrisch betreibbare Heizelement 15 angeordnet. Die Heizelemente 15 sind als elektrisch betreibbare Heizstäbe ausgebildet, die mit ihren Längsachsen parallel zur Längsachse der Leitung 9 für ein zweites Fluid verlaufen. Ihre Wärmeleitverbindung mit der Leitung 9 für ein zweites Fluid besteht bei durch die Leitung 9 strömenden zweiten Fluid direkt zwischen den Heizelementen 15 und dem zweiten Fluid innerhalb der Leitung 9. Als Variante sind zur Verbesserung der Wärmeleitverbindung besonders gut wärmeleitende Materialien, wie beispielsweise Wärmeleitbleche, an den Heizelementen 15 denkbar. Vorstellbar sind auch andere Arten von elektrisch betreibbaren Heizelementen 15, wie beispielsweise eine Heizfolie an der Innenseite der Rohrwand der Leitung 9 für das zweite Fluid.

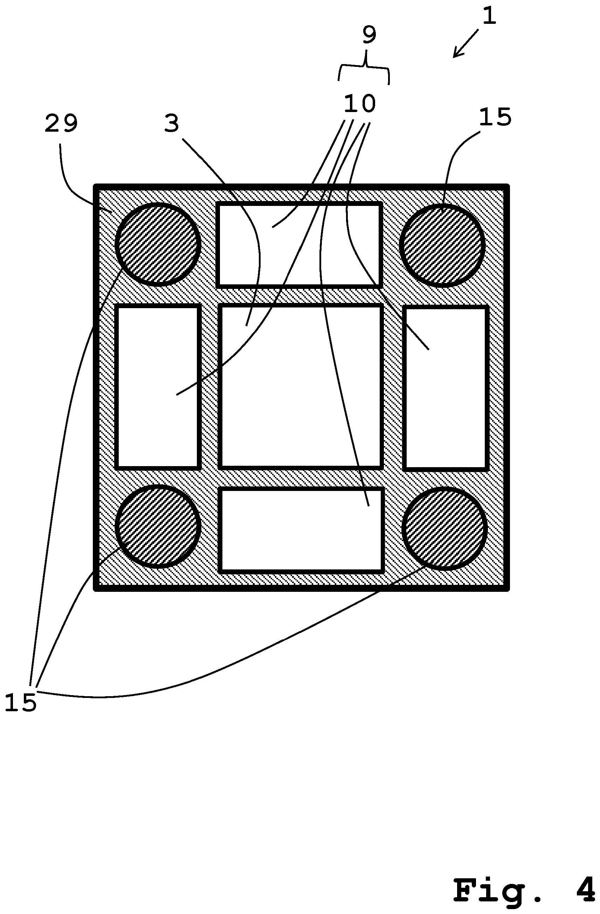

In Fig. 4 ist eine Ansicht eines Querschnitts in Schnittebene senkrecht zur Längsachse eines weiteren Ausführungsbeispiels eines Wärmetauschers 1 gezeigt. Die Leitung 3 für ein erstes Fluid verläuft als zentraler Kanal mit quadratischem Querschnitt in einem ein gut wärmeleitendes Material 29, wie zum Beispiel Aluminium, enthaltenden langgestreckten Quader, dessen äußere Form im Wesentlichen die des Wärmetauschers 1 darstellt. Die Leitung 3 für ein erstes Fluid ist in einen Fluidkreislauf für ein erstes Fluid integrierbar. Sie ist von vier Segmenten 10 der Leitung 9 für ein zweites Fluid umgeben. Die vier Segmente 10 umschließen die Leitung 3 für ein erstes Fluid nicht vollständig, aber umgeben sie zu einem großen Teil. Diese vier Segmente 10 verlaufen mit ihren Längsachsen parallel zur Längsachse der Leitung 3 für ein erstes Fluid. Sie weisen jeweils einen rechteckigen Querschnitt auf und sind jeweils als Kanal im gut wärmeleitenden Material 29 des im Wesentlichen als Quader ausgeformten Wärmetauschers 1 ausgebildet. Es besteht an einer Seite eines jeweiligen Segments 10 der Leitung 9 für das zweite Fluid durch das gut wärmeleitende Material 29 eine Wärmetauschverbindung zur zentralen Leitung 3 für ein erstes Fluid. Zwischen zwei benachbarten Segmenten 10 der Leitung 9 für das zweite Fluid ist jeweils in Wärmeleitverbindung dazu ein elektrisch betreibbares Heizelement 15 angeordnet. Diese vier Heizelemente 15 sind als Heizstäbe in den im Wesentlichen als Quader ausgeformten Wärmetauscher 1 jeweils im Bereich einer seiner Längskanten eingefügt. Die Längsachsen der Heizelemente 15 verlaufen parallel zu den Längsachsen der vier Segmente 10 der Leitung 9 für das zweite Fluid. Die Heizelemente 15 sind außerhalb der Leitung 3 für ein erstes Fluid angeordnet. Die vier Segmente 10 der Leitung 9 für ein zweites Fluid sind jeweils an ihren vorderen und hinteren Enden zu einer Leitung 9 mit Anschlussmöglichkeit für eine Integration in einen Fluidkreislauf für das zweite Fluid zusammengeführt, was aufgrund der Darstellung in Fig. 4 nicht zu sehen ist.

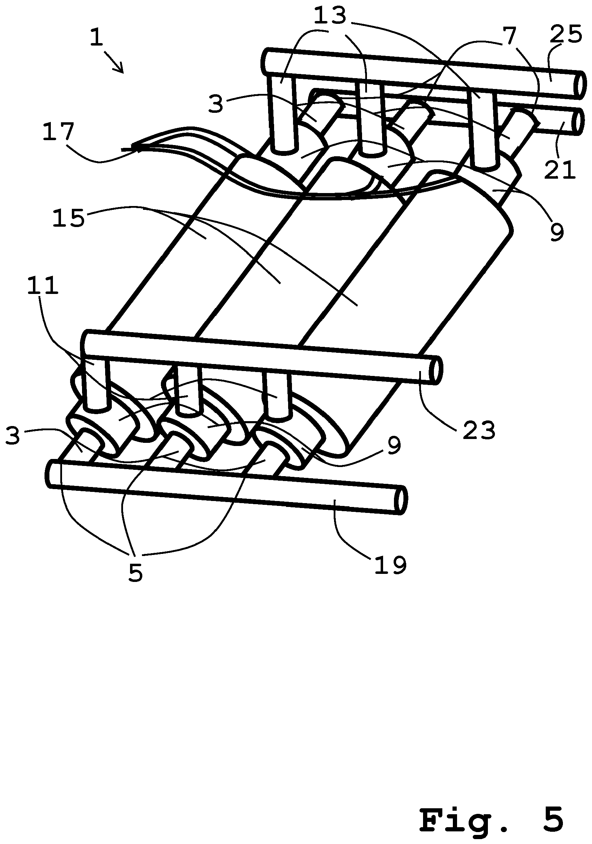

In Fig. 5 ist ein Ausführungsbeispiel eines Wärmetauschers 1 gezeigt, der als Fluid-Fluid-Wärmetauscher ausgebildet ist. Dabei sind drei koaxial jeweils eine Leitung 3 für ein erstes Fluid enthaltende Leitungen 9 für ein zweites Fluid bezüglich ihrer Längsachsen parallel nebeneinander angeordnet. Denkbar sind auch Ausführungen mit einer anderen Anzahl von parallelen jeweils eine Leitung 3 koaxial enthaltene Leitungen 9 für ein zweites Fluid. Die jeweilige Leitungen 3 für ein erstes Fluid, das beispielsweise ein Kältemittel wie R-134a, R-1234yf oder R-744 sein kann, hat einen kreisrunden Querschnitt in Schnittebene senkrecht zu ihrer Längsachse. Die jeweiligen vorderen Anschlussenden 5 der Leitungen 3 für das erste Fluid sind an eine vordere Sammelleitung 19 angeschlossen, die an einen Fluidkreislauf anschließbar ist. Die jeweiligen hinteren Anschlussenden 7 der Leitungen 3 für das erste Fluid sind an eine hintere Sammelleitung 21 angeschlossen, die an denselben Fluidkreislauf anschließbar ist. Damit sind die Leitungen 3 für ein erstes Fluid in einen Fluidkreislauf integrierbar. Die Leitungen 9 für ein zweites Fluid sind über eine vordere Sammelleitung 23 und eine hintere Sammelleitung 25 in einen weiteren Fluidkreislauf integrierbar. Ihre jeweiligen vorderen Anschlussstutzen 11 münden in die vordere Sammelleitung 23 und ihre jeweiligen hinteren Anschlussstutzen 13 münden in die hintere Sammelleitung 25. Die jeweilige Leitungen 9 für ein zweites Fluid hat einen kreisrunden Querschnitt in Schnittebene senkrecht zu ihrer Längsachse. Es besteht eine

Wärmetauschverbindung für einen Wärmetausch eines ersten mit einem zweiten Fluid durch die Rohrwand der jeweiligen Leitung 3 für ein erstes Fluid, die koaxial in der jeweiligen Leitung 9 für das zweite Fluid verläuft.

Um die jeweilige Leitung 9 für ein zweites Fluid herum, in der jeweils koaxial die Leitung 3 für ein erstes Fluid verläuft, ist jeweils ein elektrisch betreibbares Heizelement 15 angeordnet. Das jeweilige Heizelement 15 umfasst eine elektrisch betreibbare Heizfolie, deren eine Oberfläche an der äußeren Leitungswand der jeweiligen Leitung 9 für ein zweites Fluid in Wärmeleitverbindung anliegt. Dadurch kann ein durch die Leitung 9 strömendes zweites Fluid wie beispielsweise deionisiertes Wasser als Kühlmittel erwärmt werden. Die drei elektrisch betreibbaren Heizelemente 15 sind über die elektrischen Leitungen 17 an eine elektrischen Energiequelle oder einen elektrischen Energiespeicher anschließbar.

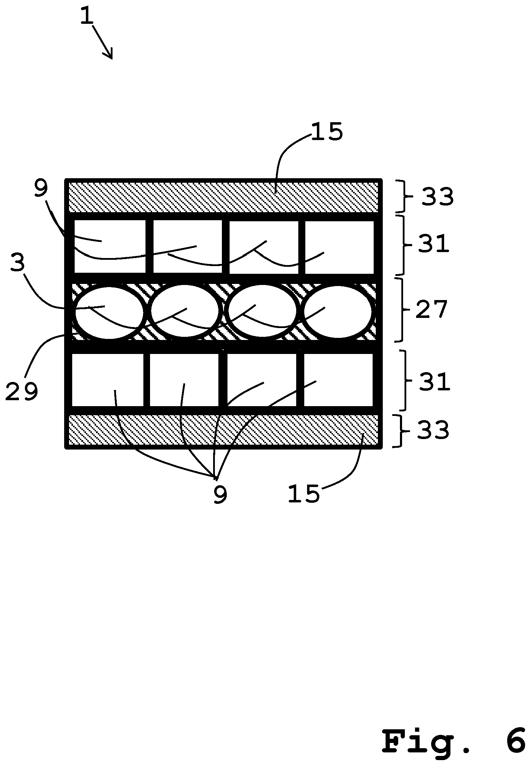

In Fig. 6 ist eine Ansicht eines vertikalen Schnitts von einem als Plattenwärmetauscher ausgebildeten Ausführungsbeispiel eines Wärmetauschers 1 gezeigt. Die mittlere Schicht 27 umfasst ohne auf die Anzahl beschränkt zu sein vier Leitungen 3 für ein erstes Fluid. Diese Leitungen 3 weisen jeweils einen ovalen Querschnitt zu ihrer Längsachse auf. Denkbar sind auch andere geeignete Formen eines Leitungsquerschnitts. Die Leitungen 3 für ein erstes Fluid sind in diesem Ausführungsbeispiel als Kanalleitungen durch ein gut wärmeleitendes Material 29, wie beispielsweise Aluminium, der mittleren Schicht 27 ausgebildet. Die Leitungen 3 für ein erstes Fluid weisen in Fig. 6 nicht dargestellte vordere und hintere Anschlussenden zum Anschluss an einen Fluidkreislauf auf. Die Leitungen 3 für ein erstes Fluid sind also in einen Fluidkreislauf integrierbar. Über und unter der mittleren Schicht 27 ist jeweils schichtweise angrenzend eine Schicht 31 mit jeweils vier Leitungen 9 für ein zweites Fluid. Diese Leitungen 9 weisen ohne auf diese Form beschränkt zu sein rechteckige Querschnitte auf. Es ist auch eine andere Anzahl von Leitungen 9 für ein zweites Fluid in einer Schicht 31 denkbar. Die Wände der Leitungen 9 bestehen aus gut wärmeleitendem Material wie beispielsweise Aluminium. Die Leitungen 3 für ein erstes Fluid der mittleren Schicht 27 und die Leitungen 9 für ein zweites Fluid der angrenzenden Schichte 31 sind also so angeordnet, dass jeweils eine Wärmetauschverbindung für einen Wärmetausch eines ersten mit einem zweiten Fluid besteht. Die Leitungen 9 für ein zweites Fluid weisen in Fig. 6 nicht dargestellte vordere und hintere Anschlussenden zum Anschluss an einen weiteren Fluidkreislauf auf. Die Leitungen 9 für ein zweites Fluid sind also in einen weiteren Fluidkreislauf integrierbar. Die oberste und unterste Schicht 33 des Wärmetauschers 1 umfassen jeweils ein als Heizfolie ausgebildetes elektrisch betreibbares Heizelement 15. Diese Schichten 33 sind jeweils schichtweise angrenzend an jeweils einer Schicht 31 mit Leitungen 9 für ein zweites Fluid. Es besteht jeweils eine Wärmeleitverbindung zwischen einem Heizelement 15 und den Leitungen 9 für ein zweites Fluid der jeweils angrenzenden Schicht 31, sodass damit ein durchströmendes zweites Fluid erwärmbar ist. Beide Schichten 31 mit den Leitungen 9 für das zweite Fluid sind jeweils schichtförmig angrenzend zwischen einer ein elektrisch betreibbares Heizelement 15 umfassenden Schicht 33 und einer Leitungen 3 für das erste Fluid umfassenden Schicht 27 wärmeleitend angeordnet.

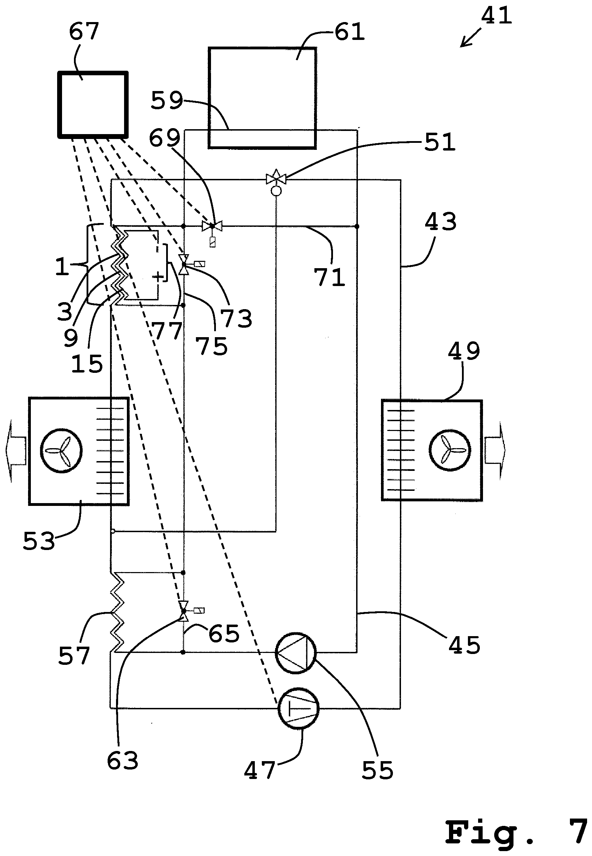

In Fig. 7 ist ein Ausführungsbeispiel eines Kreislaufsystems 41 mit einem als Kältemittelkreislauf ausgebildeten ersten Fluidkreislauf 43 und einem als Kühlmittelkreislauf ausgebildeten zweiten Fluidkreislauf 45 dargestellt. Im ersten Fluidkreislauf 43 sind ein Verdichter 47, ein Kondensator/Gaskühler 49, ein als thermostatisches Expansionsventil ausgebildetes Expansionsorgan 51 und ein Verdampfer 53 über Kältemittelleitungen verbunden angeordnet, sodass ein Kältemittel wie beispielsweise R-134a, R-1234yf oder R-744 darin als erstes Fluid zirkulieren kann. Ferner ist ein als Fluid-Fluid-Wärmetauscher ausgebildeter Wärmetauscher 1 im Niedrigdruckbereich stromabwärts des Expansionsorgans 51 und stromaufwärts vom Verdampfer 53 in den ersten Fluidkreislauf 43 mit der Leitung 3 für das erste Fluid integriert. Der Wärmetauscher 1 entspricht dem in Fig. 5 dargestellten Wärmetauscher, wie oben zu Fig. 5 beschrieben. Denkbar ist beispielweise auch ein wie in Fig. 1a oder wie in Fig. 6 gezeigter Wärmetauscher 1. Dieser Wärmetauscher 1 ist außerdem in den zweiten Fluidkreislauf 45 integriert. Im zweiten Fluidkreislauf 45 sind auch eine Fluidfördereinrichtung 55 als Kühlmittelpumpe, ein weiterer Wärmetauscher 57 und eine Wärmetauschverbindung 59 zu einem als Aggregat ausgebildeten Objekt 61, wie beispielweise einer Traktionsbatterie, über Kühlmittelleitungen verbunden angeordnet. Der weitere Wärmetauscher 57 dient einem Wärmetausch zwischen dem ersten und zweiten Fluid. Er ist im zweiten Fluidkreislauf 45 durch entsprechendes Schalten des Ventils 63 im Bypass 65 umgehbar. Das Ventil 63 wird dabei von der als Steuerung mit Prozessor ausgebildeten Regelung 67 geregelt. Ferner ist im zweiten Fluidkreislauf 45 die Wärmeleitverbindung 59 zum als Aggregat ausgebildeten Objekt 61 durch entsprechendes Schalten des Ventils 69 im Bypass 71 umgehbar. Das Ventil 69 wird dabei von der Regelung 67 geregelt. Außerdem ist im zweiten Fluidkreislauf 45 der Wärmetauscher 1 durch entsprechendes Schalten des Ventils 73 im Bypass 75 zu den in den zweiten Fluidkreislauf 45 integrierten Leitungen 9 des Wärmetauschers 1 umgehbar. Das Ventil 73 wird dabei von der Regelung 67 geregelt. Diese regelt auch die Zuführung von elektrischer Energie zu den elektrisch betreibbaren Heizelementen 15 des Wärmetauschers 1. Die elektrische Energie dazu wird von dem als aufladbare Batterie ausgebildeten elektrischen Energiespeicher 77 geliefert. Die Heizelemente 15 des Wärmetauschers 1 stehen in Wärmeleitverbindung zu dessen in den zweiten Fluidkreislauf 45 integrierten Leitungen 9 für das zweite Fluid, sodass dort durchströmendes Kühlmittel von den elektrisch betreibbaren Heizelementen 15 erwärmt werden kann. Zusätzlich regelt die Regelung 67 den Verdichter 47. Im Wärmetauscher 1 kann also je nach entsprechendem Regeln der Regelung 67 durchströmendes zweites Fluid, das ein Kühlmittel ist, mit den elektrisch betreibbaren Heizelementen 15 des Wärmetauschers 1 erwärmt oder durch die Leitungen 3 des Wärmetauscher 1 als erstes Fluid strömendes kälteres Kältemittel gekühlt werden. Die Regelung 67 empfängt von in Fig. 7 aus Gründen der Übersichtlichkeit nicht dargestellte Temperatursensoren die Temperaturen des zu temperierenden Objekts 61 und des zweiten Fluides und ermittelt daraus, ob das zweite Fluid erwärmt oder gekühlt oder weder erwärmt noch gekühlt werden soll, und regelt entsprechend die Ventile 63, 69 und 73, den Verdichter 47 sowie die Heizelemente 15 des Wärmetauschers 1. Die Verbindungen zum Regeln sind mit gestrichelten Linien in Fig. 7 dargestellt. Das Kreislaufsystem 41 ist für ein Landfahrzeug, wie beispielsweise ein Radlader mit Elektroantrieb, vorgesehen.

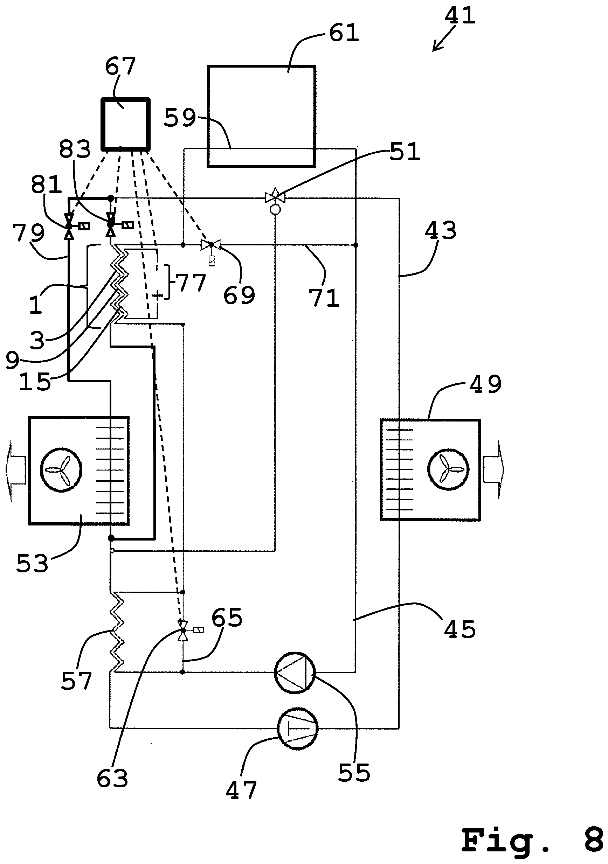

In Fig. 8 ist ein Ausführungsbeispiel eines weiteren Kreislaufsystems 41 mit einem als Kältemittelkreislauf ausgebildeten ersten Fluidkreislauf 43 und einem als Kühlmittelkreislauf ausgebildeten zweiten Fluidkreislauf 45 dargestellt. Dieses Kreislaufsystem 41 entspricht im Wesentlichen dem in Fig. 7 gezeigten. Der Wärmetauscher 1 entspricht dem in Fig. 5 dargestellten Wärmetauscher, wie oben zu Fig. 5 beschrieben. Denkbar ist beispielweise auch ein wie oben in Fig. 1a oder wie in Fig. 6 gezeigter Wärmetauscher 1. Statt wie in Fig. 7 einem Bypass mit Ventil im zweiten Fluidkreislauf 45 zum Wärmetauscher 1 existiert in dem in Fig. 8 gezeigten Kreislaufsystem 41 zu den in den ersten Fluidkreislauf 43 integrierten Leitungen 3 des Wärmetauschers 1 ein Bypass 79 mit Ventil 81 und dem Verdampfer 53 im Niedrigdruckbereich des ersten Fluidkreislaufs 43. Ferner ist noch zwischen Expansionsorgan 51 und Wärmetauscher 1 im ersten Fluidkreislauf 43 ein weiteres Ventil 83 angeordnet. Statt des Verdichters 47 und des in Fig. 7 gezeigten Ventils 73 regelt die Regelung 67 bei dem in Fig. 8 dargestellten Kreislaufsystem 41 unter anderem die beiden Ventile 81 und 83. Ansonsten entspricht das in Fig. 8 dargestellte Kreislaufsystem 41 dem in Fig. 7 mit diesbezüglich gleichen Bezugszeichen gezeigten Kreislaufsystem 41. Mit der Regelung 67 ist das Kreislaufsystem 41 derart regelbar, dass durch das zweite Fluid im zweiten Fluidkreislauf 45 das als Aggregat ausgebildete Objekt 61 gemäß dem dafür vorgegebenen Temperaturbereich temperiert werden kann. Das Kreislaufsystem 41 ist für ein Landfahrzeug, wie beispielsweise einen Elektrolastkraftwagen, vorgesehen.

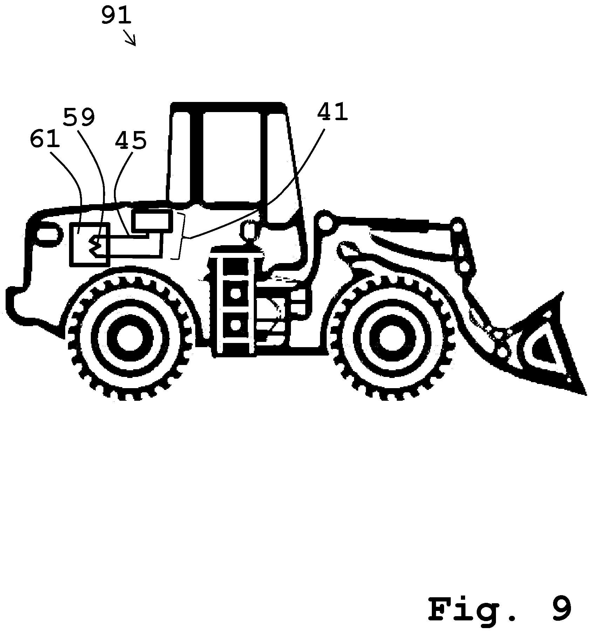

In Fig. 9 ist ein Ausführungsbeispiel eines Fahrzeugs 91 mit einem Kreislaufsystem 41, wie in Fig. 7 gezeigt, dargestellt. Das Fahrzeug 91 ist ein Radlader mit Elektroantrieb. Das als Traktionsbatterie ausgebildete Objekt 61 kann über die Wärmetauschverbindung 59 im zweiten Fluidkreislauf 45 des Kreislaufsystems 41 wie zu Fig. 7 beschrieben temperiert werden. Genauso denkbar ist als Fahrzeug 91 beispielsweise ein Gabelstapler oder eine landwirtschaftliche Zugmaschine mit Traktionsbatterie als zu temperierendes Objekt 61.

## Patentansprüche

1. Wärmetauscher (1) mit wenigstens einer in einen Fluidkreislauf integrierbaren Leitung (3) für ein erstes Fluid und mit wenigstens einer dazu in Wärmetauschverbindung für einen Wärmetausch eines ersten mit einem zweiten Fluid angeordneten in einen weiteren Fluidkreislauf integrierbaren Leitung (9) für ein zweites Fluid, wobei der Wärmetauscher (1) zumindest ein elektrisch betreibbares Heizelement (15), das in Wärmeleitverbindung mit zumindest einer der wenigstens einen Leitung (9) für ein zweites Fluid angeordnet ist, umfasst,
und der Wärmetauscher (1) für eine Integration in ein Kreislaufsystem (41) derart ausgebildet und vorgesehen ist, dass die Leitung (3) für das erstes Fluid in den Niedrigdruckbereich eines ersten Fluidkreislaufs (43) mit wenigstens einem Verdichter (47), einem Kondensator/Gaskühler (49) und einem Expansionsorgan (51) für das darin als Kältemittel zirkulierende erste Fluid und die Leitung (9) für das zweites Fluid in einen zweiten Fluidkreislauf (45) mit wenigstens einer Fluidfördereinrichtung (55) für das darin als Kühlmittel zirkulierende zweite Fluid zu integrieren sind, und wenigstens eine Leitung (3) für ein erstes Fluid koaxial in wenigstens einer Leitung (9) für ein zweites Fluid angeordnet ist **dadurch gekennzeichnet, dass** in Wärmeleitverbindung außen an wenigstens einer Leitung (9) für ein zweites Fluid, in der koaxial eine Leitung (3) für ein erstes Fluid verläuft, das wenigstens eine elektrisch betreibbare Heizelement (15) angeordnet ist,
und das wenigstens eine elektrisch betreibbare Heizelement (15)
einen um die wenigstens eine Leitung (9) für ein zweites Fluid gewundenen Heizdraht oder eine um die wenigstens eine Leitung (9) für ein zweites Fluid herum mit seiner einen Oberfläche anliegende Heizfolie umfasst.

2. Wärmetauscher (1) nach Anspruch 1 **dadurch gekennzeichnet, dass** die wenigstens eine Leitung (3) für ein erstes Fluid, die in der wenigstens einen Leitung (9) für ein zweites Fluid koaxial mit dieser angeordnet ist, einen kreisrunden Querschnitt in Schnittebene senkrecht zu ihrer Längsachse aufweist und die wenigsten eine Leitung (9) für ein zweites Fluid einen kreisrunden oder rechteckigen, vorzugsweise quadratischen, Querschnitt in Schnittebene senkrecht zu ihrer Längsachse aufweist.

3. Wärmetauscher (1) nach
Anspruch 1 oder 2 **dadurch gekennzeichnet, dass** mehrere der koaxial jeweils eine Leitung (3) für ein erstes Fluid enthaltende Leitungen (9) für ein zweites Fluid bezüglich ihrer Längsachsen parallel nebeneinander angeordnet sind.

4. Ein Kreislaufsystem (41) mit einem ersten Fluidkreislauf (43) mit wenigstens einem Verdichter (47), einem Kondensator/Gaskühler (49) und einem Expansionsorgan (51) für ein darin als Kältemittel zirkulierendes erstes Fluid sowie mit einem zweiten Fluidkreislauf (45) mit wenigstens einer Fluidfördereinrichtung (55) für ein darin als Kühlmittel zirkulierendes zweites Fluid, **dadurch gekennzeichnet, dass** ein Wärmetauscher (1) nach einem der Ansprüche 1 bis 3 in den Niedrigdruckbereich des ersten Fluidkreislaufs (43) und in den zweiten Fluidkreislauf (45) integriert ist, und das wenigstens eine Heizelement (15) dieses Wärmetauschers (1) mit elektrischer Energie aus einer elektrischen Energiequelle/-speicher (77) betreibbar ist.

5. Kreislaufsystem (41) nach Anspruch 4 **dadurch gekennzeichnet, dass** im zweiten Fluidkreislauf (45) für das zweite Fluid eine mittels Ventil (73) schaltbarer Bypass (75) zur wenigstens einen in den zweiten Fluidkreislauf (45) integrierten Leitung (9) des Wärmetauschers (1) nach einem der Ansprüche 1 bis 3 angeordnet ist und/oder im ersten Fluidkreislauf (43) für das erste Fluid eine mittels Ventil (81, 83) schaltbarer Bypass (79) zur wenigstens einen in den ersten Fluidkreislauf (43) integrierten Leitung (3) dieses Wärmetauschers (1) angeordnet ist, und das Kreislaufsystem (41) zum Einstellen der Temperatur des zweiten Fluides eine Regelung (67) ausgebildet zum Regeln des/der Ventil(s)/e (73, 81, 83) für den wenigstens einen schaltbaren Bypass (75, 79) und zum Regeln des wenigstens einen elektrischen Heizelements (15) des Wärmetauschers (1) umfasst.

6. Kreislaufsystem (41) nach Anspruch 4 oder 5 **dadurch gekennzeichnet, dass** es eine Wärmetauschverbindung (59) im zweiten Fluidkreislauf (43) mit zumindest einem zu temperierenden Objekt (61) aufweist.

7. Kreislaufsystem (41) nach Anspruch 6 **dadurch gekennzeichnet, dass** das zumindest eine zu temperierende Objekt (61) ein Aggregat eines Fahrzeugs (91), wie insbesondere eine Traktionsbatterie, ist.

8. Fahrzeug (91) mit einem Kreislaufsystem (41) nach einem der Ansprüche 4 bis 7.

9. Fahrzeug (91) nach Anspruch 8 **dadurch gekennzeichnet, dass** es ein Elektro- oder Hybridfahrzeug, wie insbesondere ein derartiger Radlader, ist.

## Claims

1. Heat exchanger (1) comprising at least one line (3) for a first fluid, which line can be integrated into a fluid circuit, and comprising at least one line (9) for a second fluid, which line is arranged in heat-exchange connection with the first line for heat exchange of a first with a second fluid, and can be integrated into a further fluid circuit, wherein the heat exchanger (1) comprises at least one electrically operable heating element (15) which is arranged in heat-conducting connection with at least one of the at least one line (9) for a second fluid,
and the heat exchanger (1) is designed and provided for integration into a circuit system (41) in such a way that the line (3) for the first fluid is to be integrated into the low-pressure region of a first fluid circuit (43) comprising at least one compressor (47), a condenser/gas cooler (49) and an expansion member (51) for the first fluid circulating therein as refrigerant, and the line (9) for the second fluid is to be integrated in a second fluid circuit (45) comprising at least one fluid conveying device (55) for the second fluid circulating therein as coolant, and at least one line (9) for a first fluid is arranged coaxially in at least one line (9) for a second fluid, **characterised in that** the at least one electrically operable heating element (15) is arranged in heat-conducting connection on the outside on at least one line (9) for a second fluid in which a line (3) for a first fluid extends coaxially, and the at least one electrically operable heating element (15) comprises a heating wire that is wound around the at least one line (9) for a second fluid, or a heating film which rests, with its one surface, around the at least one line (9) for a second fluid.

2. Heat exchanger (1) according to claim 1, **characterised in that** the at least one line (3) for a first fluid, which is arranged in the at least one line (9) for a second fluid and so as to be coaxial therewith, has a circular cross section in the sectional plane perpendicular to its longitudinal axis, and the at least one line (9) for a second fluid has a circular or rectangular, preferably square, cross section in the sectional plane perpendicular to its longitudinal axis.

3. Heat exchanger (1) according to either claim 1 or claim 2, **characterised in that** a plurality of the lines (9) for a second fluid, each containing one line (3) for a first fluid, are arranged in parallel and side-by-side with respect to their longitudinal axes.

4. Circuit system (41) comprising a first fluid circuit (43) having at least one compressor (47), a condenser/gas cooler (49) and an expansion member (51) for a first fluid circulating therein as a refrigerant, and comprising a second fluid circuit (45) having at least one fluid conveying means (55) for a second fluid circulating therein as a coolant, **characterised in that** a heat exchanger (1) according to any of claims 1 to 3 is integrated in the low-pressure region of the first fluid circuit (43) and in the second fluid circuit (45), and the at least one heating element (15) of said heat exchanger (1) is operable using electrical energy from an electrical energy source/store (77).

5. Circuit system (41) according to claim 4, **characterised in that** a bypass (75), switchable by means of a valve (73), to at least one line (9), integrated into the second fluid circuit (45), of the heat exchanger according to any of claims 1 to 3 is arranged in the second fluid circuit (45), for the second fluid, and/or a bypass (79), switchable by means of a valve (81, 83), to at least one line (3), integrated into the first fluid circuit (43), of said heat exchanger (1) is arranged in the first fluid circuit (43), for the first fluid, and, for adjusting the temperature of the second fluid, the circuit system (41) comprises a control system (67) designed for controlling the valve(s) (73, 81, 83) for the at least one switchable bypass (75, 79) and for controlling the at least one electrical heating element (15) of the heat exchanger (1).

6. Circuit system (41) according to either claim 4 or claim 5, **characterised in that** it comprises a heat-exchange connection (59) in the second fluid circuit (43) to at least one object (61) of which the temperature is to be controlled.

7. Circuit system (41) according to claim 6, **characterised in that** the at least one object (61) of which the temperature is to be controlled is a unit of a vehicle (91), such as in a particular a traction battery.

8. Vehicle (91) comprising a circuit system (41) according to any of claims 4 to 7.

9. Vehicle (91) according to claim 8, **characterised in that** it is an electric or hybrid vehicle, in particular a wheeled loader of this kind.

## Revendications

1. Echangeur de chaleur (1) avec au moins un conduit (3) pour un premier fluide pouvant être intégré dans un circuit de fluide et avec au moins un conduit (9) pour un deuxième fluide pouvant être intégré dans un autre circuit de fluide, disposé en plus en contact échangeur de chaleur pour un échange de chaleur d'un premier avec un deuxième fluide, dans lequel l'échangeur de chaleur (1) comprend au moins un élément chauffant (15) pouvant fonctionner de manière électrique, qui est disposé en contact thermoconducteur avec au moins un de l'au moins un conduit (9) pour un deuxième fluide,
et l'échangeur de chaleur (1) est réalisé et est prévu pour une intégration dans un système de circuit (41) de telle manière que le conduit (3) pour le premier fluide est à intégrer dans la zone basse pression d'un premier circuit de fluide (43) avec au moins un compresseur (47), un condensateur/refroidisseur de gaz (49) et un organe d'expansion (51) pour le premier fluide circulant dans celui-ci en tant que frigorigène, et le conduit (9) pour le deuxième fluide est à intégrer dans un deuxième circuit de fluide (45) avec au moins un dispositif de refoulement de fluide (55) pour le deuxième fluide circulant dans celui-ci en tant qu'agent de refroidissement, et au moins un conduit (3) pour un premier fluide est disposé de manière coaxiale dans au moins un conduit (9) pour un deuxième fluide, **caractérisé en ce que** l'au moins un élément chauffant (15) pouvant fonctionner de manière électrique est disposé en contact thermoconducteur à l'extérieur sur au moins un conduit (9) pour un deuxième fluide, dans lequel un conduit (3) pour un premier fluide s'étend de manière coaxiale, et l'au moins un élément chauffant (15) pouvant fonctionner de manière électrique comprend un fil métallique chauffant enroulé autour de l'au moins un conduit (9) pour un deuxième fluide ou un film chauffant reposant par une surface tout autour de l'au moins un conduit (9) pour un deuxième fluide.

2. Echangeur de chaleur (1) selon la revendication 1, **caractérisé en ce que** l'au moins un conduit (3) pour un premier fluide, qui est disposé dans l'au moins un conduit (9) pour un deuxième, fluide de manière coaxiale avec celui-ci, présente une section transversale ronde circulaire en plan de coupe de manière perpendiculaire par rapport à son axe longitudinal et l'au moins un conduit (9) pour un deuxième fluide présente une section transversale ronde circulaire ou rectangulaire, de préférence carrée, en plan de coupe de manière perpendiculaire par rapport à son axe longitudinal.

3. Echangeur de chaleur (1) selon la revendication 1 ou 2, **caractérisé en ce que** plusieurs des conduits (9) pour un deuxième fluide contenant de manière coaxiale respectivement un conduit (3) pour un premier fluide sont disposés côte à côte de manière parallèle par rapport à leurs axes longitudinaux.

4. Système de circuit (41) avec un premier circuit de fluide (43) avec au moins un compresseur (47), un condensateur/refroidisseur de gaz (49) et un organe d'expansion (51) pour un premier fluide circulant dans celui-ci en tant que frigorigène ainsi qu'avec un deuxième circuit de fluide (45) avec au moins un dispositif de refoulement de fluide (55) pour un deuxième fluide circulant dans celui-ci en tant qu'agent de refroidissement, **caractérisé en ce qu'**un échangeur de chaleur (1) selon l'une quelconque des revendications 1 à 3 est intégré dans la zone basse pression du premier circuit de fluide (43) et dans le deuxième circuit de fluide (45), et l'au moins un élément chauffant (15) de cet échangeur de chaleur (1) peut fonctionner avec une énergie électrique provenant d'une source d'énergie/d'un accumulateur d'énergie (77) électrique.

5. Système de circuit (41) selon la revendication 4, **caractérisé en ce qu'**une dérivation (75) pouvant être commutée au moyen d'une soupape (73) vers au moins un conduit (9) de l'échangeur de chaleur (1) selon l'une quelconque des revendications 1 à 3 intégré dans le deuxième circuit de fluide (45) est disposée dans le deuxième circuit de fluide (45) pour le deuxième fluide et/ou une dérivation (79) pouvant être commutée au moyen de la soupape (81, 83) vers au moins un conduit (3), intégré dans le premier circuit de fluide (43), dudit échangeur de chaleur (1) est disposée dans le premier circuit de fluide (43) pour le premier fluide, et le système de circuit (41) comprend pour régler la température du deuxième fluide une régulation (67) réalisée pour réguler la/les soupape(s) (73, 81, 83) pour l'au moins une dérivation (75, 79) pouvant être commutée et pour réguler l'au moins un élément chauffant (15) électrique de l'échangeur de chaleur (1).

6. Système de circuit (41) selon la revendication 4 ou 5, **caractérisé en ce qu'**il présente un raccord échangeur de chaleur (59) dans le deuxième circuit de fluide (43) avec au moins un objet (61) à thermoréguler.

7. Système de circuit (41) selon la revendication 6, **caractérisé en ce que** l'au moins un objet (61) à thermoréguler est un composant d'un véhicule (91), tel qu'en particulier une batterie de traction.

8. Véhicule (91) avec un système de circuit (41) selon l'une quelconque des revendications 4 à 7.

9. Véhicule (91) selon la revendication 8, **caractérisé en ce qu'**il est un véhicule électrique ou un véhicule hybride, tel qu'en particulier une chargeuse sur pneus de ce type.
